# FASCICULE DE BREVET EUROPEEN

(11) **EP 1 411 528 B1**
(45) Date de publication et mention de la délivrance du brevet: **19.12.2007**
(21) Numéro de dépôt: 03102374.0
(22) Date de dépôt: 30.07.2003
(51) Int. Cl.: G21C 19/16, G21C 19/20

(54) **Outil pour favoriser l'introduction d'un assemblage de combustible nucléaire au sein d'un coeur de réacteur nucléaire**
Werkzeug zur Erleichterung des Aufsetzens eines Kernbrennstabbündels in den Innenraum einer Kernreaktorspaltzone
Tool for facilitating the introduction of a nuclear fuel assembly inside a nuclear reactor core

(30) Priorité: 15.10.2002 FR 0212767
(43) Date de publication de la demande: 21.04.2004
(73) Titulaire: REEL, 69450 Saint Cyr au Mont d'Or (FR); Areva NP, 92400 Courbevoie (FR)
(72) Inventeur: JULLIEN, Michel, 69480, LUCENAY (FR)
(74) Mandataire: Vuillermoz, Bruno

(56) Documents cités:
- EP-A- 0 220 117
- EP-A- 0 696 806
- WO-A-95/23414
- BE-A- 1 013 126
- GB-A- 2 300 870
- US-A- 3 798 966

## Description

L'invention concerne un outil destiné à favoriser l'introduction ou l'insertion d'un assemblage de combustible nucléaire au sein d'un coeur de réacteur d'une centrale nucléaire.

De manière connue, le coeur d'un réacteur de centrale nucléaire comporte fondamentalement une cuve, à l'intérieur de laquelle est positionné un certain nombre d'assemblages de crayons de combustible verticaux, disposés côte à côte sur un sommier, également dénommé plaque de coeur.

Ces assemblages de combustible sont typiquement constitués d'un certain nombre d'aiguilles ou crayons, constitués par l'assemblage de pastilles frittées de combustible nucléaire proprement dit, notamment d'oxyde d'uranium ou de plutonium, les crayons étant maintenus au sein d'un même assemblage au moyen de grilles - entretoises, réparties suivant la hauteur des assemblages.

Ces assemblages comprennent une tête supérieure, permettant la prise et la manutention de l'assemblage au sein du réacteur, et un pied, assurant son positionnement et son maintien sur la plaque de coeur, cette dernière étant pourvue à cet effet d'orifices ou pions de positionnement, outre des orifices permettant la circulation d'un liquide de refroidissement, notamment d'eau.

Lorsque les assemblages ainsi constitués sont neufs, ils se présentent de façon rectilignes, et partant, n'engendrent pas de difficultés particulières quant à leur manipulation ou à leur mise en place au sein de la plaque de coeur. En revanche, après une certaine période d'irradiation, on observe que lesdits assemblages présentent différents types de déformation, tels que notamment des vrillages, des déformations en arc de cercle ou « banane », des flambages, ces déformations tendant à augmenter fortement avec la durée ou le degré d'irradiation, et induisant de fait, des difficultés croissantes lors de la mise en place des assemblages dans le coeur, ou lors de leur extraction hors de celui-ci.

Compte-tenu des déformations ainsi engendrées au niveau des assemblages, après un ou plusieurs cycles d'exploitation, leur réinsertion dans d'autres sites du coeur au niveau de la plaque de coeur peut poser des problèmes, notamment compte-tenu des interférences en volume avec les assemblages voisins.

Parallèlement, afm d'homogénéiser le rayonnement d'énergie dans le volume du coeur, on dispose les assemblages sur la plaque de coeur en fonction de leur degré d'usure, ou d'irradiation.

Typiquement, on fractionne la plaque de coeur en trois zones. On place les éléments neufs en périphérie, les éléments ayant subi un cycle d'exploitation en zone médiane, et les éléments les plus usagés au centre du coeur, et ceci dans le but premier d'éviter une zone chaude au centre du réacteur.

Lors du remplacement périodique, on retire pour retraitement les assembles épuisés et on les remplace par des assemblages provenant de la zone médiane. Les assemblages retirés de cette seconde zone sont remplacés par des assemblages provenant de la périphérie, lesquels sont remplacés par des assemblages neufs.

Cette répartition typique peut en outre être modifiée afm de préserver notamment la cuve d'irradiation trop importante provenant des assemblages de combustible neufs.

Quoi qu'il en soit, les phénomènes de déformation sont de plus en plus fréquents et accentués à cause notamment de l'allongement des cycles d'irradiation, et de l'évolution des méthodes de fabrication des assemblages.

Si auparavant, les déformations se présentaient sous forme de flambage des gaines entraînant la déformation en arc de cercle, également « banane », il est de plus en plus fréquent d'observer des déformations aléatoires de formes très diverses.

On conçoit de fait aisément que si le déplacement et la mise en place des premiers assemblages ne posent pas de difficulté, en revanche, la mise en place des derniers assemblages de combustibles présentent de sérieuses difficultés compte-tenu des déformations inhérentes aux assemblages voisins, susceptibles d'obturer en partie le ou les emplacements destinés à recevoir les derniers assemblages.

A ce jour, les opérateurs procèdent à l'aide du grappin relié au mât principal de la machine de chargement pour tenter de libérer l'espace ou le volume nécessaire à la mise en place de ces assemblages.

Ces opérations s'avèrent cependant tout particulièrement longues, fastidieuses et se répercutent de fait sur la durée des périodes d'arrêt des centrales, et partant affectent de manière importante la productivité des centrales.

L'objet de la présente invention est de proposer un outil susceptible de favoriser l'introduction d'un assemblage de combustible nucléaire au sein d'un coeur de réacteur, en assurant la libération du volume nécessaire à la mise en place d'un assemblage combustible, par rapport aux assemblages mitoyens déjà en place sur la plaque de coeur.

Ce but est atteint par un outil présentant les caractéristiques exposées dans la revendication 1.

Cet outil pour favoriser l'introduction d'assemblages de combustible nucléaire au sein d'un coeur de réacteur, lesdits assemblages étant de forme prismatique et de section carrée, et étant positionnés sur une pluralité d'emplacements contigus, également de section carrée, comportant chacun des pions de positionnement et des orifices de circulation d'un liquide de refroidissement et notamment d'eau, se caractérise en ce qu'il est constitué d'au moins un actionneur pourvu de moyens d'appui, qui, en position rétractée présente un encombrement inférieur à celui d'un assemblage de combustible, lesdits moyens d'appui étant destinés à agir au niveau des assemblages de combustible mitoyens et/ou au niveau des baffles de la cuve mitoyennes de l'emplacement considéré au niveau duquel il est introduit, ledit actionneur étant muni de moyens de préhension destiné à coopérer avec le grappin d'un mât de manutention permettant son introduction au niveau de l'emplacement considéré.

Plus précisément, les moyens dont sont pourvus l'actionneur agissent selon un plan perpendiculaire à la direction principale de l'assemblage de combustible, et notamment dans les quatre directions perpendiculaires aux côtés du carré définissant la section de chacun des emplacements des assemblages, traditionnellement qualifiées nord, sud, est et ouest. L'action selon ces quatre directions peut être simultanée, ou être réalisée de manière successive deux à deux, selon les axes Nord - Sud, et Est - Ouest.

Ces moyens peuvent être typiquement constitués de vérins mécaniques, électriques, pneumatiques ou hydrauliques. Ils peuvent à être à actionnement automatique ou commandés au moyen d'un pupitre de commande situé soit en bord de piscine de la cuve, soit au niveau de la machine de chargement.

Selon une première forme de réalisation de l'invention, l'outil s'étend sur toute la hauteur de l'assemblage de combustible et est positionnable au niveau de la plaque de coeur, et ancrable au niveau de celle-ci, plus particulièrement au niveau des pions de positionnement dont cette dernière est pourvue.

Ce faisant, on confère à l'outil une certaine rigidité, et un point d'appui permettant aux moyens dont est muni l'actionneur d'agir plus efficacement au niveau des assemblages de combustibles mitoyens.

Selon une autre forme de réalisation de l'invention, l'outil ne comporte qu'un seul actionneur destiné à agir uniquement au niveau des têtes des assemblages de combustibles.

Selon une autre variante, l'outil comporte plusieurs actionneurs, répartis sur sa hauteur, avantageusement au niveau des grilles - entretoises des assemblages combustibles. Cependant, attendu qu'il n'est pas rare qu'au sein d'un même coeur, figurent des assemblages d'origines diverses, les grilles - entretoises sont susceptibles de ne pas se situer toutes au même niveau.

De la sorte, l'outil est avantageusement muni de lames de répartition d'efforts, c'est à dire de plaques métalliques, notamment en acier inoxydable, verticales, planes parallèles aux côtés des assemblages mitoyens, et s'étendant sur toute la hauteur de l'outil. Ces lames sont solidarisées à l'extrémité des moyens dont sont munis les actionneurs.

Ce faisant, l'effort développé par les actionneurs est limité, et mieux réparti au niveau des assemblages mitoyens.

Ces lames peuvent être renforcés localement, par tout dispositif de renfort approprié.

La manière dont l'invention peut être réalisée et les avantages qui en découlent ressortiront mieux de l'exemple de réalisation qui suit, donné à titre indicatif et non limitatif à l'appui des figures annexées.

La figure 1 est une représentation schématique en perspective de l'outil conforme à l'invention.
La figure 2 est une représentation schématique section longitudinale dudit outil.
La figure 3 est une représentation schématique illustrant en section transversale le positionnement de l'outil en position rétractée.
La figure 4 est une vue analogue à la figure 3, en position partiellement développée.
La figure 5 est une vue analogue à la figure 3, en position complètement développée.

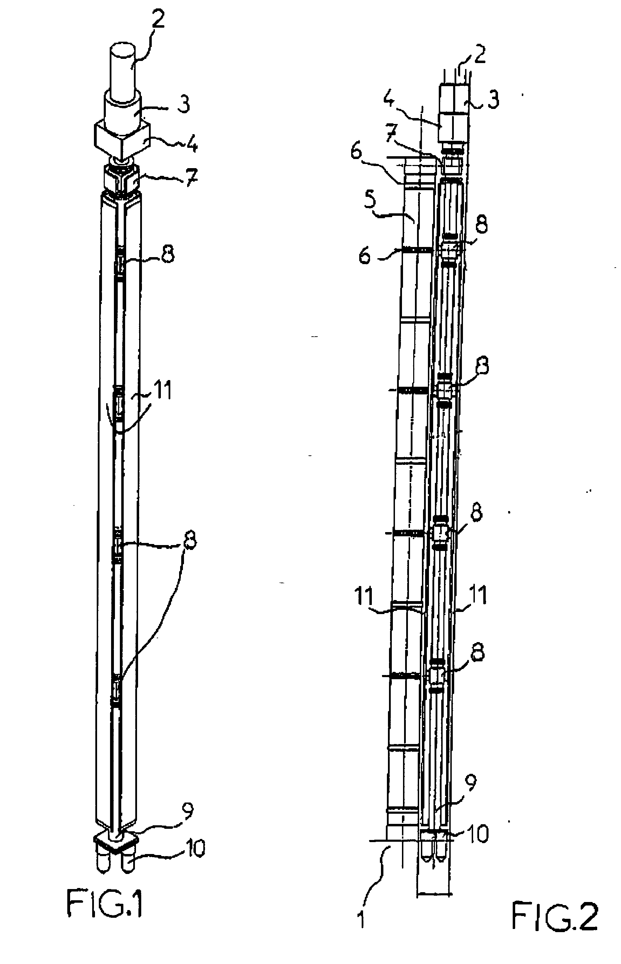

On a donc représenté en relation avec les figures 1 et 2, l'outil conforme à l'invention, selon une première forme de réalisation particulière.

Cet outil, ainsi que déjà dit, est destiné à être manutentionné soit par la machine de chargement des assemblages de combustible nucléaire, soit par un outil indépendant, dédié spécifiquement au fonctionnement de cet outil.

Dans le premier cas, l'un des mâts de la machine est aménagé pour la manutention et le stockage de l'outil, qui en phase de rechargement, reste en permanence au sein de la machine, et qui peut-être démonté après le chargement et mis en container pour être transféré et utilisé sur d'autres sites.

Dans la seconde alternative, en phase de rechargement, l'outil et les éléments nécessaires à son fonctionnement sont stockés dans le bâtiment réacteur côté transfert. En cas de besoin, l'outil est appréhendé au moyen d'un grappin (3), qui peut-être soit celui de manutention du combustible de la machine de chargement, soit un grappin solidaire d'un moyen de manutention annexe. Ce grappin est solidarisé, en général de manière réversible, à l'extrémité inférieure d'une perche de manutention (2).

Cet outil, dans la forme de réalisation décrite, comprend différents actionneurs (7) (8), montés sur une structure rigide (9), de hauteur équivalente à la hauteur d'un assemblage de combustible (5).

Cette structure rigide (9) est munie au niveau de son extrémité inférieure de pions de positionnement (10), destinés à venir se mettre en place au niveau des orifices prévus à cet effet, et au niveau de chacun des emplacements d'assemblages de combustible, ménagés au sein de la plaque de coeur (1).

Ce faisant, l'outil est ainsi maintenu au niveau de ses deux extrémités, respectivement au niveau de la plaque de coeur et à son extrémité supérieure, par le mât de manutention (par l'intermédiaire du grappin (3) solidarisé réversiblement à la tête (4) de l'outil), lui conférant un référentiel dans le plan (X, Y), c'est à dire dans le plan horizontal, et par ailleurs, une plus grande résistance mécanique, dans le cadre du fonctionnement des actionneurs, et donc une plus grande efficacité.

Avantageusement, l'outil comporte un actionneur, dit de « tête », référencé (7), destiné à agir au niveau de la tête du ou des assemblages mitoyens. Il comporte également d'autres actionneurs (8), répartis sur la hauteur de la structure, et avantageusement positionné à l'aplomb des grilles - entretoises (6), desdits assemblages (5) de combustible mitoyens.

Cependant, et afin de mieux répartir l'effort desdits actionneurs, la structure comporte également des lames de répartition d'effort (11), s'étendant sur toute la hauteur de la structure, ainsi qu'on peut bien l'observer sur les figures 1 et 2, solidarisé aux actionneurs, et parallèles aux côtés des assemblages ou baffles au niveau desquels elles sont destinées à prendre appui.

Ces lames sont typiquement réalisés en acier inoxydable et sont éventuellement renforcées par des éléments de renfort internes (non représentés), afin de mieux résister aux efforts auxquels elles sont soumises par les actionneurs en cours d'opération.

Les actionneurs vont être décrits ci-après plus en détail.

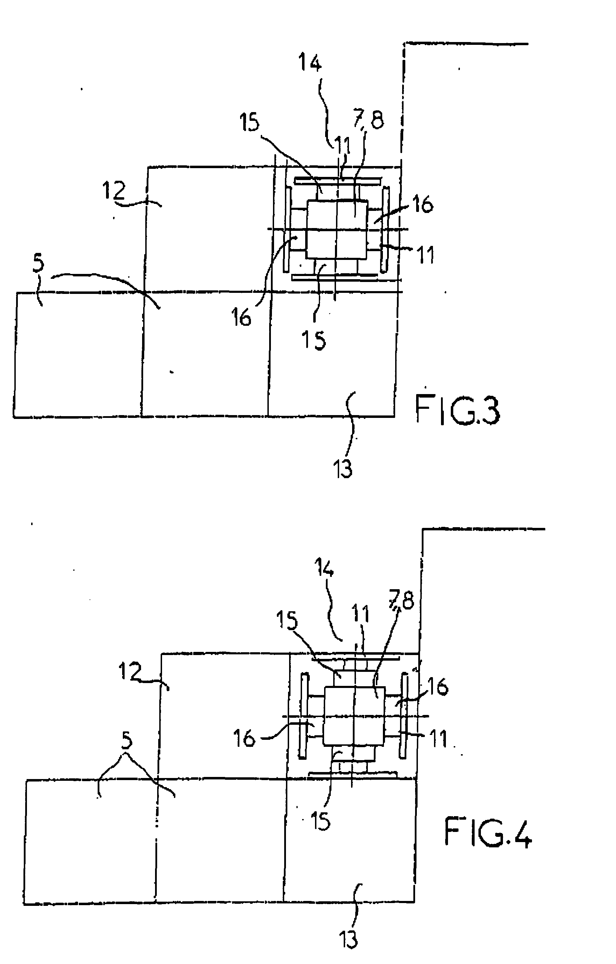

Ainsi qu'on peut l'observer au niveau des figures 3, 4 et 5, ils présentent un débattement horizontal, selon des directions perpendiculaires aux côtés des sections carrées définissant les assemblages de combustible, selon des directions Nord - Sud, et Est - Ouest.

Ils sont typiquement constitués de vérins (15, 16) de nature électrique, pneumatique, mécanique voire hydraulique.

La course de ce chacun de ces moyens est voisine de 3 cm, de sorte que lorsque l'outil est en position rétractée, il peut être inséré relativement facilement à l'intérieur d'un emplacement libre d'assemblages de combustible, afin de pouvoir remplir son office, sans frottement au contact des assemblages de combustible voisins.

Ainsi en figure 3, l'outil est représenté en position complètement rétractée, et on peut observer le jeu permettant l'introduction de l'outil sans frottement sur les assemblages déjà en place.

Sur la figure 4, l'actionneur représenté est déployé (15) sur deux faces antagonistes prenant appui sur une baffle (14) d'une part, et sur l'assemblage mitoyen (13), afin de repousser l'assemblage (13) présentant une déformation interdisant l'introduction de l'assemblage au niveau duquel est introduit l'outil.

L'actionneur est agencé de telle sorte à pouvoir développer une force voisine de 500 daN, suffisante pour repousser un assemblage combustible mitoyen, voire un ensemble d'assemblages, dans la mesure où l'encombrement au niveau du volume de l'emplacement au niveau duquel est placé l'outil, peut résulter d'une part, d'un assemblage immédiatement voisin, mais également des déformations cumulées au niveau d'une ligne d'assemblages.

Les forces à appliquer peuvent être d'intensité différente en fonction des zones d'action, notamment au niveau de la tête, ou au niveau des crayons de combustible, et des efforts tolérés par les différents équipements.

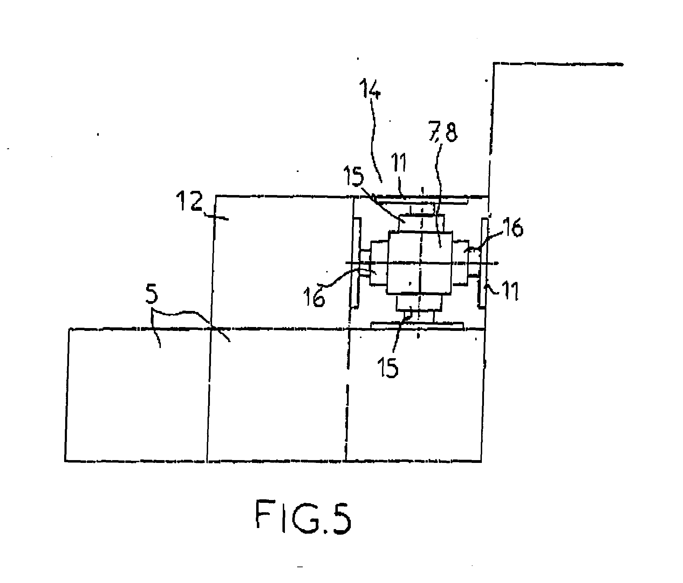

Sur la figure 5, on a représenté un actionneur déployé au niveau de ses quatre faces, afin de permettre de repousser l'assemblage (12) et l'assemblage (13).

Dans le cas d'un la mise en place d'un assemblage au sein d'un emplacement délimité par seulement trois autres assemblages déjà en place, la force applicable sur l'assemblage dépourvu d'assemblage antagoniste est proportionnelle à la force nominale susceptible d'être développée par l'actionneur, diminuée du coefficient de frottement dudit actionneur sur les deux autres assemblages.

On conçoit de fait que les actionneurs peuvent être mobilisés indépendamment les uns des autres, afin de redresser l'assemblage ou le mur d'assemblages déformés.

Lorsque l'opération est terminée, l'outil est rétractée et évacuée vers son lieu d'attente.

L'assemblage combustible de l'emplacement considéré peut alors être introduit de manière traditionnelle, par la machine de chargement.

On conçoit de fait tout l'intérêt de l'outil conforme à l'invention, puisqu'il permet de manière simple et rapide de libérer l'emplacement d'un assemblage considéré.

Selon une forme de réalisation non représentée, l'outil conforme à l'invention peut ne présenter qu'un seul actionneur (7), agissant au niveau de la seule tête des assemblages de combustibles mitoyens. Dans cette hypothèse, l'outil est exempt de la structure rigide (9), et ne prend donc pas appui au niveau de la plaque de coeur (1).

## Revendications

1. Outil pour favoriser l'introduction d'assemblages (5) de combustible nucléaire au sein d'un coeur de réacteur, lesdits assemblages étant de forme prismatique et de section carrée, et étant positionnés sur une pluralité d'emplacements contigus, également de section carrée, comportant chacun des pions de positionnement et des orifices de circulation d'un liquide de refroidissement et notamment d'eau, ***caractérisé* en ce qu**'il est constitué d'au moins un actionneur muni de moyens de préhension (4) destiné à coopérer avec le grappin (3) d'un mât de manutention (2) permettant son introduction au sein d'un emplacement libre d'assemblages de combustible nucléaire dans le coeur de réacteur, ledit actionneur étant pourvu de moyens d'appui (15, 16) destinés à agir au niveau des assemblages de combustible mitoyens (12, 13) et/ou au niveau des baffles, ledit actionneur étant susceptible de se présenter sous deux positions :
■ une position rétractée, dans laquelle l'actionneur présente un encombrement inférieur à celui d'un assemblage de combustible, permettant ainsi son insertion au sein dudit emplacement libre ;
■ une position déployée, dans laquelle les moyens (15, 16) dont il est pourvu prennent appui contre les assemblages de combustible mitoyens (12, 13) et/ou contre les baffles mitoyennes (14) de la cuve de réacteur de l'emplacement au sein duquel est introduit l'actionneur.

2. Outil pour favoriser l'introduction d'assemblages (5) de combustible nucléaire au sein d'un coeur de réacteur selon la revendication 1, ***caractérisé* en ce que** les moyens d'appui (15, 16) dont sont pourvus le ou les actionneurs agissent selon un plan perpendiculaire à la direction principale de l'assemblage de combustible, et notamment dans les quatre directions perpendiculaires aux côtés du carré définissant la section de chacun des emplacements des assemblages.

3. Outil pour favoriser l'introduction d'assemblages (5) de combustible nucléaire au sein d'un coeur de réacteur selon la revendication 2, ***caractérisé* en ce que** l'action des moyens d'appui dont sont pourvus le ou les actionneurs est réalisée simultanément selon les quatre directions perpendiculaires aux côtés du carré définissant la section de chacun des emplacements des assemblages, ou de manière successive deux à deux.

4. Outil pour favoriser l'introduction d'assemblages (5) de combustible nucléaire au sein d'un coeur de réacteur selon l'une des revendications 1 à 3, ***caractérisé* en ce que** les moyens d'appui (15, 16) dont sont pourvus le ou les actionneurs sont constitués par des vérins mécaniques, électriques, pneumatiques ou hydrauliques.

5. Outil pour favoriser l'introduction d'assemblages (5) de combustible nucléaire au sein d'un coeur de réacteur selon la revendication 4, ***caractérisé* en ce que** les vérins sont à actionnement automatique ou sont commandés au moyen d'un pupitre de commande situé soit en bord de piscine de la cuve, soit au niveau de la machine de chargement.

6. Outil pour favoriser l'introduction d'assemblages (5) de combustible nucléaire au sein d'un coeur de réacteur selon l'une des revendications 1 à 5, ***caractérisé* en ce qu'**il s'étend sur toute la hauteur de l'assemblage de combustible et est positionnable au niveau de la plaque de coeur (1), et ancrable au niveau de celle-ci, plus particulièrement au niveau des pions de positionnement dont cette dernière est pourvue par l'intermédiaire d'une structure interne (9).

7. Outil pour favoriser l'introduction d'assemblages (5) de combustible nucléaire au sein d'un coeur de réacteur selon la revendication 6, ***caractérisé* en ce qu**'il comporte plusieurs actionneurs, répartis sur sa hauteur et fixés sur la structure interne (9).

8. Outil pour favoriser l'introduction d'assemblages (5) de combustible nucléaire au sein d'un coeur de réacteur selon l'une des revendications 6 et 7, ***caractérisé* en ce qu'**il est muni de lames de répartition d'effort (11), planes et montées parallèles aux côtés des assemblages mitoyens, et s'étendant sur toute la hauteur de l'outil, solidarisées à l'extrémité des moyens d'appui (15, 16) dont sont munis les actionneurs, et destinées à prendre appui contre les assemblages de combustible mitoyens ou les baffles mitoyennes.

9. Outil pour favoriser l'introduction d'assemblages (5) de combustible nucléaire au sein d'un coeur de réacteur selon la revendication 8, ***caractérisé* en ce que** les lames de répartition d'effort (11) sont renforcés localement, par tout dispositif de renfort approprié.

10. Outil pour favoriser l'introduction d'assemblages (5) de combustible nucléaire au sein d'un coeur de réacteur selon l'une des revendications 1 à 5, ***caractérisé* en ce qu'**il ne comporte qu'un seul actionneur destiné à agir uniquement au niveau des têtes des assemblages de combustible mitoyens.

## Claims

1. A tool for assisting loading of nuclear fuel assemblies (5) inside a reactor core, said assemblies having a prismatic shape and square cross section, and being positioned on a plurality of adjacent locations, also with square cross section, each comprising positioning pins and orifices for circulating a liquid coolant and in particular water, **characterized in that** it consists of at least one actuator provided with gripping means (4) intended to interact with the grab (3) of a handling mast (2) used to load same at a free location of nuclear fuel assemblies in the reactor core, said actuator being provided with pressure means (15, 16) intended to act on the intermediate fuel assemblies (12, 13) and/or on the intermediate reactor vessel baffles (14), said actuator being able to be in two positions :
■ a retracted position, in which the actuator has a space requirement less than that of a fuel assembly, thus making its insertion possible in said free location ;
■ a deployed position, in which the means (15, 16) it is provided with are pressing on the intermediate fuel assemblies (12, 13) and/or on the intermediate reactor vessel baffles (14) of the reactor tank of the location in which is inserted the actuator.

2. The tool for assisting loading of nuclear fuel assemblies (5) inside a reactor core as claimed in claim 1, **characterized in that** the means (15, 16) with which the actuator or actuators is (are) provided act on a plane perpendicular to the main direction of the fuel assembly, and in particular in the four directions perpendicular to the sides of the square defining the cross section of each of the assembly locations.

3. The tool for assisting loading of nuclear fuel assemblies (5) inside a reactor core as claimed in claim 2, **characterized in that** the action of the means with which the actuator or actuators is (are) provided, is carried out simultaneously in the four directions perpendicular to the sides of the square defining the cross section of each of the assembly locations, or in successive manner two by two.

4. The tool for assisting loading of nuclear fuel assemblies (5) inside a reactor core as claimed in one of claims 1 to 3, **characterized in that** the means (15, 16) with which the actuator or actuators is (are) provided consist of mechanical, electric, pneumatic or hydraulic cylinders.

5. The tool for assisting loading of nuclear fuel assemblies (5) inside a reactor core as claimed in claim 4, **characterized in that** the cylinders are actuated automatically or are controlled by means of a control console situated either at the edge of the vessel cavity, or at the refueling machine.

6. The tool for assisting loading of nuclear fuel assemblies (5) inside a reactor core as claimed in one of claims 1 to 5, **characterized in that** it extends over the whole height of the fuel assembly and can be positioned on the core plate (1) and be anchored thereon, more particularly on the positioning pins with which the latter is provided by means of an internal structure (9).

7. The tool for assisting loading of nuclear fuel assemblies (5) inside a reactor core as claimed in claim 6, **characterized in that** it comprises several actuators, distributed over its height and attached to the internal structure (9).

8. The tool for assisting loading of nuclear fuel assemblies (5) inside a reactor core as claimed in one of claims 6 and 7, **characterized in that** it is furnished with pressure distribution metal sheets (11) which are flat and mounted parallel to the sides of the intermediate assemblies, and extending over the whole height of the tool, secured to the end of the means (15, 16) with which the actuators are furnished, and intended to press against the intermediate fuel assemblies or the intermediate baffles.

9. The tool for assisting loading of nuclear fuel assemblies (5) inside a reactor core as claimed in claim 8, **characterized in that** the pressure distribution metal sheets (11) are reinforced locally by any appropriate reinforcement device.

10. The tool for assisting loading of nuclear fuel assemblies (5) inside a reactor core as claimed in one of claims 1 to 5, **characterized in that** it comprises only one actuator intended to act only at the heads of the intermediate fuel assemblies.

## Patentansprüche

1. Werkzeug zur Erleichterung der Einführung von Kernbrennstabbündeln (5) in einen Reaktorkern, wobei diese Brennstabbündel prismenförmig und von einem quadratischen Querschnitt sind und an einer Vielzahl von aneinandergrenzenden Standplätzen ebenfalls mit quadratischem Querschnitt positioniert sind, umfassend jeweils Positionierungszapfen und Öffnungen für den Umlauf einer Kühlflüssigkeit und insbesondere Wasser, **dadurch gekennzeichnet, dass** es aus mindestens einer Betätigungseinrichtung besteht, die mit Greifmitteln (4) versehen ist, die dazu bestimmt sind, mit dem Greifer (3) eines Manipuliermastes (2) zusammenzuwirken, der seine Einführung in einen freien Standplatz von Kernbrennstabbündeln im Reaktorkern gestattet, wobei diese Betätigungseinrichtung mit Abstützmitteln (15, 16) versehen ist, die dazu bestimmt sind, an den Zwischenbrennstabbündeln (12, 13) und/oder an den Gehäusen zu wirken, wobei diese Betätigungseinrichtung zwei Stellungen einnehmen kann:
• eine eingezogene Stellung, in der die Betätigungseinrichtung kleinere Abmessungen als ein Brennstabbündel aufweist und die **dadurch** seine Einführung in diesen freien Standplatz gestattet;
• eine ausgefahrene Stellung, in der die Mittel (15, 16), mit denen sie versehen ist, sich an den Zwischenbrennstabbündeln (12, 13) und/oder an den Zwischengehäusen (14) des Reaktorbehälters des Standplatzes, in den die Betätigungseinrichtung eingeführt ist, abstützen.

2. Werkzeug zur Erleichterung der Einführung von Kernbrennstabbündeln in einen Reaktorkern nach Anspruch 1, **dadurch gekennzeichnet, dass** die Abstützmittel (15, 16), mit denen die Betätigungseinrichtung oder -einrichtungen versehen sind, in einer zur Hauptrichtung des Brennstabbündels senkrechten Ebene und insbesondere in den vier Richtungen wirken, die zu den Seiten des Quadrats senkrecht sind, das den Querschnitt jedes der Standplätze der Brennstabbündel definiert.

3. Werkzeug zur Erleichterung der Einführung von Kernbrennstabbündeln (5) in einen Reaktorkern nach Anspruch 2, **dadurch gekennzeichnet, dass** die Wirkung der Abstützmittel, mit denen die Betätigungseinrichtung oder -einrichtungen versehen sind, gleichzeitig in den vier Richtungen, die zu den Seiten des Quadrats senkrecht sind, das den Querschnitt jedes der Standplätze der Brennstabbündel definiert, oder paarweise nacheinander ausgeübt wird.

4. Werkzeug zur Erleichterung der Einführung von Kernbrennstabbündeln (5) in einen Reaktorkern nach Anspruch 1 bis 3, **dadurch gekennzeichnet, dass** die Abstützmittel (15, 16), mit denen die Betätigungseinrichtung oder -einrichtungen versehen sind, aus mechanischen, elektrischen, pneumatischen oder hydraulischen Stellgliedern bestehen.

5. Werkzeug zur Erleichterung der Einführung von Kernbrennstabbündeln (5) in einen Reaktorkern nach Anspruch 4, **dadurch gekennzeichnet, dass** die Stellglieder automatisch betätigt werden oder über ein Steuerpult gesteuert werden, das entweder am Rand des Beckens des Behälters oder bei der Lademaschine angeordnet ist.

6. Werkzeug zur Erleichterung der Einführung von Kernbrennstabbündeln (5) in einen Reaktorkern nach einem der Ansprüche 1 bis 5, **dadurch gekennzeichnet, dass** es sich über die ganze Höhe des Brennstabbündels erstreckt und auf Höhe der Kernplatte (1) positionierbar und auf deren Höhe verankerbar ist, insbesondere auf Höhe der Positionierungszapfen, mit denen diese versehen ist, und zwar über eine innere Struktur (9).

7. Werkzeug zur Erleichterung der Einführung von Kernbrennstabbündeln (5) in einen Reaktorkern nach Anspruch 6, **dadurch gekennzeichnet, dass** es mehrere Betätigungseinrichtungen umfasst, die auf seiner Höhe verteilt sind und an der inneren Struktur (9) befestigt sind.

8. Werkzeug zur Erleichterung der Einführung von Kernbrennstabbündeln (5) in einen Reaktorkern nach einem der Ansprüche 6 und 7, **dadurch gekennzeichnet, dass** es mit ebenen Kraftverteilungslamellen (11) versehen ist, die parallel zu den Seiten der Zwischenbrennstabbündel montiert sind, sich über die ganze Höhe des Werkzeugs erstrecken, am Ende der Abstützmittel (15, 16), mit denen die Betätigungseinrichtungen versehen sind, befestigt sind und dazu bestimmt sind, sich an den Zwischenbrennstabbündel oder den Zwischengehäusen abzustützen.

9. Werkzeug zur Erleichterung der Einführung von Kernbrennstabbündeln (5) in einen Reaktorkern nach Anspruch 8, **dadurch gekennzeichnet, dass** die Kraftverteilungslamellen (11) örtlich durch jede beliebige geeignete Verstärkungsvorrichtung verstärkt sind.

10. Werkzeug zur Erleichterung der Einführung von Kernbrennstabbündeln (5) in einen Reaktorkern nach einem der Ansprüche 1 bis 5, **dadurch gekennzeichnet, dass** es nur eine einzige Betätigungseinrichtung umfasst, die dazu bestimmt ist, nur auf Höhe der Köpfe der Zwischenbrennstabbündel zu wirken.
